# EUROPÄISCHE PATENTSCHRIFT

(11) **EP 0 500 567 B1**
(45) Veröffentlichungstag und Bekanntmachung des Hinweises auf die Patenterteilung: **07.06.1995**
(21) Anmeldenummer: 90915465.0
(22) Anmeldetag: 30.10.1990
(51) Int. Cl.: H04N 9/28, H04N 17/04

(54) **EINRICHTUNG ZUR RASTERKORREKTUR IN EINEM FERNSEHGERÄT**
GRID-CORRECTION DEVICE FOR A TV SET
DISPOSITIF DE CORRECTION DE TRAME DANS UN TELEVISEUR

(30) Priorität: 04.11.1989 DE 3936787
(43) Veröffentlichungstag der Anmeldung: 02.09.1992
(73) Patentinhaber: Deutsche Thomson-Brandt GmbH, 78003 Villingen-Schwenningen (DE)
(72) Erfinder: GLEIM, Günter, D-7730 VS-Villingen (DE); CHAUVIN, Jacques, D-7733 Mönchweiler (DE)
(74) Vertreter: Einsel, Robert, Dipl.-Ing.
(86) Internationale Anmeldenummer: EP9001933
(87) Internationale Veröffentlichungsnummer: WO9107058

(56) Entgegenhaltungen:
- EP-A- 0 069 554
- EP-A- 0 194 944
- Patent Abstracts of Japan, Band 9, Nr. 291 (E-359)(2014), 19. November 1985; & JP-A-60130288

## Beschreibung

Die Erfindung geht aus von einer Einrichtung zur Rasterkorrektur in einem Fernsehgerät gemäß dem Oberbegriff des Anspruchs. Eine derartige Einrichtung zur Rasterkorrektur ist bekannt durch die EP-A1-0 194 944. Unter Fernsehgerät wird dabei jedes Gerät mit einer elektronischen Bildwiedergabe und rasterweisen Ablenkung verstanden. Das Gerät kann von einem Fernseh-Rundfunksignal oder einem Videosignal von einem anderen Videogeber wie einem Recorder, einer Kamera oder einer sonstigen Videoleitung gespeist werden. Die Steuerung des Gerätes kann über ein Antennensignal, ein FBAS-Signal, ein RGB-Signal oder auch getrennt mit dem Leuchtdichtesignal und dem Farbträger erfolgen.

Eine derartige Einrichtung dient grundsätzlich zur Korrektur von Parametern in der Rasterablenkung, z.B. zur Korrektur von Nord/Süd-, Ost/West-Verzeichnungen, von Nichtlinearitäten in der Ablenkung und sonstigen Geometriefehlern in horizontaler oder vertikaler Richtung. Ein besonderes Anwendungsgebiet ist die Konvergenzkorrektur bei einem Fernseh-Projektionsgerät, bei dem monochromatische Bilder von drei Bildröhren auf eine Bildfläche projiziert und dort zur Dekkung gebracht werden.

Bei den beschriebenen Geräten gibt es andererseits Betriebsarten mit unterschiedlicher Ablenkamplitude, wenn z.B. Bilder mit unterschiedlichem Seitenverhältnis dargestellt werden sollen. Bei einer Änderung der Ablenkamplitude verschiebt sich das Gittermuster auf dem Bildschirm, so daß nunmehr die Kreuzungspunkte an anderen Stellen der Bildfläche liegen. Da die jeweils für einen Kreuzungspunkt ermittelten Korrekturwerte aber nur für diesen Punkt gelten, müssen bei verschiedenen Betriebsarten unterschiedliche Korrekturwerte ermittelt und gespeichert werden. Die Zahl der notwendigen Speicher oder Speicherplätze nimmt also entsprechend der Anzahl der verschiedenen Betriebsarten zu, was einen beträchtlichen Aufwand an zusätzlichen Speichern bedeutet.

Der Erfindung liegt die Aufgabe zugrunde, bei der beschriebenen Einrichtung für verschiedene Betriebsarten mit unterschiedlicher Ablenkamplitude den Aufwand an Speichern zu verringern.

Diese Aufgabe wird durch die im Anspruch 1 angegebene Erfindung gelöst. Vorteilhafte Weiterbildungen der Erfindung sind in den Unteransprüchen angegeben.

Es ist auch ein Testgitter-Signalgenerator bekannt (EP-A3-0 069 554), bei dem ein Testgittergenerator einen Impulsgenerator für vertikale Linien zur Erzeugung einer ersten Impulsfolge und einer zweiten Impulsfolge enthält, wobei die erste Impulsfolge zur Darstellung senkrechter Linien auf einem Bildschirm und zwischen aufeinanderfolgenden Impulsen der zweiten Impulsfolge eine Anzahl von Impulsen enthält, die der Anzahl der vertikalen Linien entspricht.

Die Erfindung beruht auf folgender Überlegung. Die Geometrieverhältnisse werden im folgenden anhand eines Gittermusters erläutert. Sie gelten aber ganz allgemein für die Darstellung eines Bildes. Die Dehnung oder Stauchung des Gittermusters bei verschiedenen Betriebsarten mit unterschiedlicher Ablenkamplitude und damit die Verschiebung der Gitterpunkte auf der Bildfläche ist an sich unvermeidbar. Bei der Erfindung werden nun bei Übergang auf eine Betriebsart mit anderer Ablenkamplitude die Steuerimpulse, die das Gittermuster auf der Bildfläche erzeugen, sowie die Steuerimpulse, die die Korrekturwerte auslesen, zeitlich innerhalb des Ablenkrasters verschoben. Dann ergibt sich die Möglichkeit, unabhängig von der jeweiligen Ablenkamplitude die Linien des Gittermusters immer so zu schreiben, daß bei allen Betriebsarten die Gitterlinien und die Kreuzungspunkte an denselben räumlichen Stellen der Bildfläche liegen. Das bedeutet wiederum, daß die für die Kreuzungspunkte ermittelten und gespeicherten Korrekturwerte unverändert für alle Betriebsarten verwendet werden können. Es werden also keine zusätzlichen Speicher benötigt. Dennoch ergibt sich kein schaltungstechnischer Mehraufwand, weil keine zusätzlichen Werte gespeichert werden müssen, sondern nur eine Verschiebung der Steuerimpulse z.B. durch Umschaltung von Zählern erreicht wird. Wenn also das Gittermuster auf der Bildfläche abgebildet wird und eine Umschaltung zwischen verschiedenen Betriebsarten mit unterschiedlicher Ablenkamplitude erfolgt, verschieben sich die Gitterlinien und damit auch die Kreuzungspunkte des Gittermusters auf dem Bildschirm nicht. Mit den Kreuzungspunkten sind jeweils die Bildpunkte gemeint, für die Korrekturwerte ermittelt und gespeichert sind. Die erfindungsgemäße Lösung ist sowohl in vertikaler Richtung bei Änderung der Vertikalablenkamplitude als auch in horizontaler Richtung bei Änderung der Horizontalablenkperiode oder kombiniert bei beiden Änderungen anwendbar. In Vertikalrichtung wird vorzugsweise die Zahl der Zeilen zwischen zwei horizontalen Gitterlinien geändert. In Horizontalrichtung wird der zeitliche Abstand zwischen den die vertikalen Linien erzeugenden Steuerimpulsen geändert, z.B. durch Änderung der Frequenz oder der Zahl der Taktimpulse zwischen zwei Kreuzungspunkten.

Die Erfindung wird anhand der Zeichnung am Beispiel der Konvergenz für ein Fernseh-Projektionsgerät erläutert. Darin zeigen
- Fig. 1: die Bildfläche mit dem Gittermuster und den Kreuzungspunkten für eine Betriebsart,
- Fig. 2: die Bildfläche für eine andere Betriebsart,
- Fig. 3: ein Diagramm für die Vertikalrichtung,
- Fig. 4: ein Blockschaltbild zu Fig. 3,
- Fig. 5: den in Fig. 4 auftretenden Steuerimpuls,
- Fig. 6: ein Diagramm für die Horizontalrichtung,
- Fig. 7: ein Blockschaltbild für Fig. 6 und
- Fig. 8: die in Fig. 7 erzeugten Steuerimpulse.

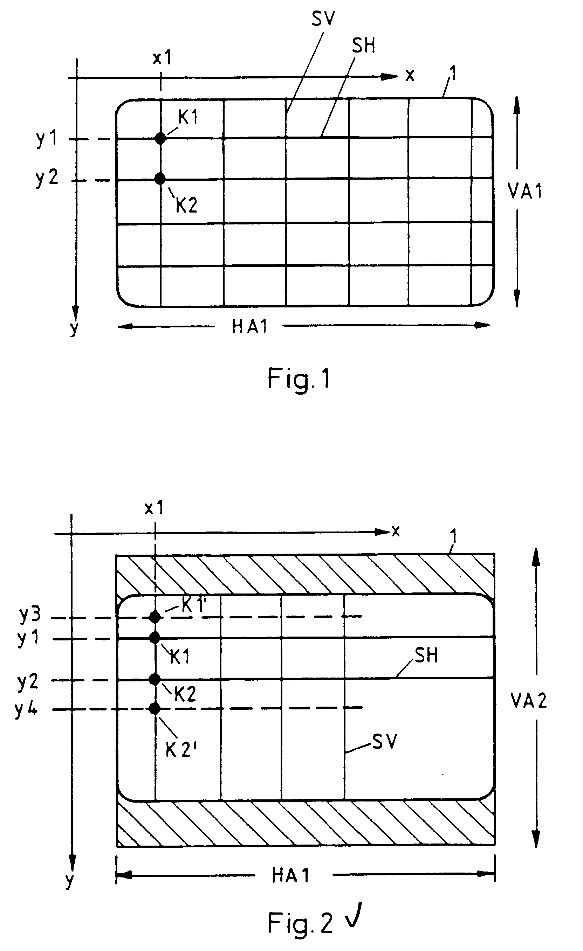

Fig. 1 zeigt eine Bildfläche 1 mit dem Seitenverhältnis 16:9. Darauf ist ein übliches Fernsehbild im Seitenverhältnis 16:9 mit einer Vertikalablenkamplitude VA1 und einer Horizontalablenkamplitude HA1 abgebildet. Auf der Bildfläche ist ein Gittermuster mit horizontalen Linien SH und senkrechten Linien SV geschrieben, die eine Vielzahl von Kreuzungspunkten K bilden. In dem dargestellten Koordinatensystem gelten die folgenden Koordinatenwerte:
K1 (x1, y1)
K2 (x1, y2).

Für die Kreuzungspunkte K1, K2 sind Korrekturwerte für die Konvergenz in Speichern abgelegt. Diese Korrekturwerte gelten somit nur für die Kreuzungspunkte K1, K2 usw. mit den dargestellten Koordinaten, also nur für diese räumlichen Stellen der Bildfläche.

Fig. 2 zeigt eine andere Betriebsart, bei der auf der gesamten Bildfläche 1 ein Bild mit einem 4:3 Ablenkraster mit Überschreibung dargestellt wird. Es sei der Fall angenommen, daß gegenüber Fig. 1 die Vertikalablenkamplitude gegenüber VA1 auf den Wert VA2 erhöht und die Horizontalablenkamplitude HA1 unverändert ist. Dadurch kommt es zu einer Dehnung des Gittermusters. Die Kreuzungspunkte verschieben sich
von K1(x1,y1) nach K1′(x1,y3)
von K2 (x1,y2) nach K2′(x1,y4).

Die Kreuzungspunkte K1′, K2′ liegen also jetzt gegenüber Fig. 1 an anderen Stellen der Bildfläche, für die keine Konvergenz-Korrekturwerte gespeichert sind. Die Korrekturwerte für K1′, K2′ müßten also neu ermittelt und gespeichert werden.

Die die Kreuzungspunkte K bildenden Linien SH, SV werden durch den Bildröhren zugeführte Steuerimpulse erzeugt. Die zeitliche Lage dieser Steuerimpulse innerhalb des Ablenkrasters wird nun so geändert und damit die Lage der Linien SH, SV auf der Bildfläche 1 so verschoben, daß die Verschiebung der Kreuzungspunkte, z.B. von K1 nach K1′ nicht auftritt und die Kreuzungspunkte K in Fig. 2 an denselben Stellen wie in Fig. 1 liegen. Das bedeutet, daß gegenüber Fig. 1 keine neue Ermittlung und Speicherung von Korrekturwerten erforderlich ist.

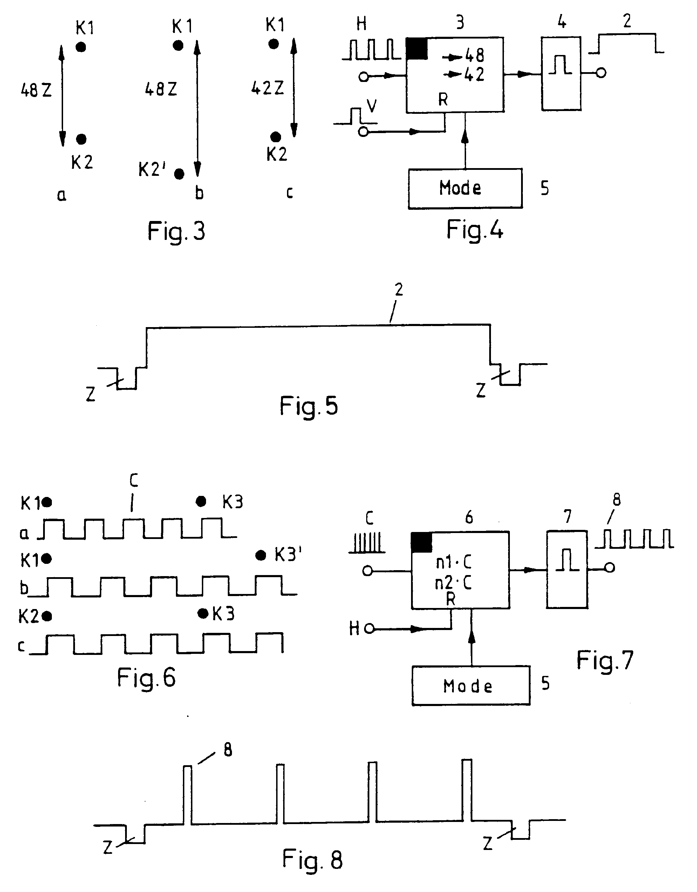

Fig. 3 zeigt ein Beispiel für die Vertikalrichtung. In einer ersten Betriebsart haben die auf einer vertikalen Linie SV übereinander liegenden Kreuzungspunkte K1, K2 den Abstand von 48 Zeilen. In einer zweiten Betriebsart mit erhöhter Vertikalablenkamplitude und gleicher Gesamtzeilenzahl, somit auch gleicher Zeilenzahl zwischen K1 und K2, würde der räumliche Abstand zwischen K1 und K2 vergrößert. K2 verschiebt sich nach K2′ gemäß Fig. 3b. Durch zeitliche Verschiebung der Steuerimpulse für die horizontalen Linien SH, in diesem Fall auf einen Abstand von 42 Zeilen, werden die Punkte K1, K2 gemäß Fig. 3c wieder auf den ursprünglichen Abstand und die ursprüngliche Lage auf dem Bildschirm gemäß Fig. 3a gebracht, so daß sie räumlich an denselben Stellen der Bildfläche liegen wie in der ersten Betriebsart.

Fig. 4 zeigt eine Schaltung zur Erzeugung der Steuerimpulse 2 für die horizontalen Linien SH. Die zeilenfrequenten Impulse H steuern den Zähler 3, der jeweils durch einen vertikalfrequenten Impuls V zurückgesetzt wird. Jeweils von Bildbeginn werden in dem Zähler 3 gemäß Fig.3 48 Impulse H gezählt. Daraufhin gibt der Zähler 3 einen Impuls ab, der in dem Impulsgenerator 4 den sich über die ganze Zeilenhinlaufzeit erstreckenden Steuerimpuls 2 für die Linien SH erzeugt. Der Zähler 3 wird von der Mode-Erkennungsschaltung 5 so gesteuert, daß er gemäß Fig. 3 in einem zweiten Mode bereits nach 42 Zeilen den Auslöseimpuls für den Generator 4 erzeugt.

Fig. 5 zeigt den Steuerimpuls 2, der jeweils in den Zeilen erzeugt wird, die die waagerechten Linien SH darstellen. Der Impuls 2 erstreckt sich über die gesamte Zeilenhinlaufzeit.

Fig. 6 zeigt ein Beispiel für die Horizontalrichtung. Die Steuerimpulse jeweils während einer Zeile zur Erzeugung der vertikalen Linien SV werden durch eine Taktimpulsfolge C mit einem Vielfachen der Zeilenfrequenz ausgelöst. Gemäß Fig. 6a liegen zwischen zwei in horizontaler Richtung versetzten Kreuzungspunkt K1, K3 vier Perioden der Taktimpulsfolge C. Bei einer Erhöhung der Horizontalablenkamplitude würde sich gemäß Fig. 6b die Lage der Kreuzungspunkte ändern in K1 und K3′. Um die Verschiebung von K3′ gegenüber K3 auszugleichen, erfolgt die Auslösung des Steuerimpulses für die vertikale Linie SV mit K3 bereits nach drei Perioden von C, so daß der Punkt K3 wieder dieselbe Lage hat wie in Fig. 6a. Ebenso kann auch die Frequenz der Taktimpulsfolge geändert werden.

In Fig. 7 steuert die Taktimpulsfolge C den Zähler 6, der in einem ersten Mode nach n1 Perioden von C einen Impuls für den Impulsgenerator 7 erzeugt. Dieser erzeugt jeweils Steuerimpulse 8 während einer Zeile, die die senkrechten Linien SV erzeugen. Der Zähler 6 wird jeweils am Anfang einer Zeile durch den Impuls H zurückgesetzt. Die Mode-Erkennungsschaltung 5 steuert im Zähler 6 die Zahl n derart, daß die erzeugten Steuerimpulse 8 gemäß Fig. 6 immer an denselben räumlichen Stellen der Bildfläche liegen, dargestellt durch n2*C für eine zweite Betriebsart.

Fig. 8 zeigt vier Steuerimpulse 8 während der Hinlaufzeit einer Zeile zwischen den Zeilensynchronimpulsen Z. Die Steuerimpulse 8 erzeugen die senkrechten Linien SV und liegen bei allen Betriebsarten mit unterschiedlicher Horizontalablenkamplitude durch unterschiedliche Steuerung von n des Zählers 6 immer an denselben räumlichen Stellen der Bildfläche.

## Patentansprüche

1. Einrichtung zur Rasterkorrektur in einem Fernsehgerät, bei dem auf der Bildfläche (1) mit Steuerimpulsen (2, 8) für den Abgleich ein Gittermuster aus horizontalen und vertikalen Linien (SH, SV) erzeugt wird und die für die Gitterkreuzungspunkte (K) ermittelten Korrekturwerte in einem Speicher abgelegt werden und bei unterschiedlichen Betriebsarten die zeitliche Lage der Steuerimpulse innerhalb des Ablenkrasters jeweils so geändert wird, daß die Kreuzungspunkte bei den unterschiedlichen Betriebsarten an denselben räumlichen Stellen der Bildfläche (1) des Fernsehgeräts liegen,
mit einem ersten Zähler (3), dem zeilenfrequente Impulse (H) für die Zählung und ein vertikaler Impuls (V) zum Rücksetzen zugeführt werden, und der die Steuerimpulse (2) für die horizontalen Linien (SH) auslöst,
mit einer MODE-Steuerschaltung (5), die den Zählerstand des ersten Zählers, bei dem ein Auslöseimpuls für die Steuerimpulse (2) für die horizontalen Linien (SH) abgegeben wird, in Abhängigkeit von der Betriebsart umschaltet, **dadurch gekennzeichnet,**
daß die MODE-Steuerschaltung (5) weiter so ausgebildet ist, daß sie bei Betriebsarten mit unterschiedlichen vertikalen Ablenkamplituden den ersten Zähler (3) so ansteuert, daß die Zahl der Zeilen zwischen zwei horizontalen Linien geändert wird,
daß sie einen zweiten Zähler (6) aufweist, mittels dem durch Taktimpulse (C), deren Frequenz ein Vielfaches der Zeilenfrequenz beträgt, durch Zählung Steuerimpulse (8) für die vertikalen Linien (SV) erzeugt werden, und dem zum Zurücksetzen horizontalfrequente Impulse (H) zugeführt werden,
daß die MODE-Steuerschaltung so ausgebildet ist, daß sie den Zählerstand des zweiten Zählers (6) für die Auslösung der Steuerimpulse (8) für die vertikalen Linien (SV) in Abhängigkeit von der Betriebsart entsprechend der horizontalen Ablenkamplitude umschaltet, so daß bei gleichzeitiger Änderung der Taktimpulse (C) in ihrer Frequenz oder in ihrer Zahl zwischen zwei vertikalen Linien (SV), bei Betriebsarten mit unterschiedlichen horizontalen Ablenkamplituden die zeitliche Lage der die vertikalen Linien erzeugenden Steuerimpulse (8) entsprechend der horizontalen Ablenkamplitude geändert wird.

## Claims

1. A device for raster correction in a television device, in which a grid pattern of horizontal and vertical lines (SH, SV) is produced on the picture area (1) by means of control pulses (2, 8) for the alignment, and the correction values determined for the grid crossing points (K) are stored in a memory, and in different modes of operation the temporal position of the control pulses within the deflection raster is altered in each case such that the crossing points in the different modes of operation lie at the same spatial location of the picture area (1) of the television device,
with a first counter (3) to which are supplied line-frequency pulses (H) for counting and a vertical pulse (V) for resetting, and which triggers the control pulses (2) for the horizontal lines (SH),
with a MODE-control circuit (5) which, in dependence on the mode of operation, switches over the counting state of the first counter, at which is supplied a trigger pulse for the control pulses (2) for the horizontal lines (SH), **characterised in that** the MODE - control circuit (5) is further constructed so that for modes of operation with differing vertical deflection amplitudes it controls the first counter (3) so that the number of lines between two horizontal lines is altered,
in that it comprises a second counter (6), by means of which from clock pulses (C), the frequency of which is a multiple of the line frequency, by counting these are generated control pulses (8) for the vertical lines (SV), and to which counter there are supplied horizontal frequency pulses (H) for resetting,
in that the MODE - control circuit is so constructed that, corresponding to the horizontal deflection amplitude, it switches over the counting state of the second counter (6) for the triggering of the control pulses (8) for the vertical lines (SV) in dependence on the mode of operation, so that with simultaneous alteration of the clock pulses (C) in their frequency or in their number between two vertical lines (SV), with modes of operation with differing horizontal deflection amplitudes, the temporal position of the control pulses (8) producing the vertical lines is altered corresponding to the horizontal deflection amplitude.

## Revendications

1. Dispositif de correction de balayage de trame dans un téléviseur dans lequel un quadrillage composé de lignes horizontales et verticales (SH, SV) est généré à des fins de compensation dans la zone d'image (1) à l'aide d'impulsions de commande (2, 8) et de valeurs de correction déterminées pour les points d'intersection du quadrillage (K) mémorisées dans une mémoire et, en cas de changement de mode de fonctionnement, la position temporelle des impulsions de commande au sein de la trame de balayage est modifiée de telle manière que les points d'intersection dans les différents modes de fonctionnement se trouvent dans les mêmes positions spatiales de la zone d'image (1),
avec un premier compteur (3) auquel sont transmises des impulsions (H) pour le comptage et une impulsion verticale (V) de remise à zéro qui déclenche les impulsions de commande (2) pour les lignes horizontales (SH),
avec un dispositif de commande de MODE (5) qui commute, en fonction du mode, l'état du premier compteur dans lequel est délivrée une impulsion de déclenchement des impulsions de commande (2) pour les lignes horizontales (SH), **caractérisé en ce que**
le dispositif de commande de MODE (5) est conçu de telle manière que, dans des modes de fonctionnement à amplitudes de déflexion verticales différentes, il contrôle le premier compteur (3) de telle sorte que le nombre de lignes entre deux lignes horizontales est modifié,
en ce qu'il comporte un second compteur (6) qui génère, par comptage, des impulsions de commande (8) pour les lignes verticales (SV) à l'aide d'impulsions d'horloge (C) dont la fréquence est un multiple de la fréquence ligne et auquel sont transmises des impulsions à fréquence horizontale (H) pour sa remise à zéro,
en ce que le dispositif de commande de MODE est conçu de telle sorte qu'il commute l'état du second compteur (6) pour le déclenchement des impulsions de commande (8) des lignes verticales (SV) en fonction du mode, conformément à l'amplitude de déflexion horizontale, de sorte qu'avec une modification simultanée de la fréquence des impulsions d'horloge (C) ou de leur nombre entre deux lignes verticales (SV), dans des modes à amplitudes de déflexion horizontale différentes, la position temporelle des impulsions de commande (8) générant les lignes verticales est modifiée en fonction de l'amplitude de déflexion horizontale.
